# EUROPEAN PATENT SPECIFICATION

(11) **EP 3 288 768 B1**
(45) Date of publication and mention of the grant of the patent: **05.06.2019**
(21) Application number: 16722543.2
(22) Date of filing: 25.04.2016
(51) Int. Cl.: B41M 3/14, B41N 3/08, B41M 1/06

(54) **WET OFFSET PRINTING PROCESS**
NASSOFFSETDRUCKVERFAHREN
PROCÉDÉ D'IMPRESSION OFFSET HUMIDE

(30) Priority: 28.04.2015 EP 15165381
(43) Date of publication of application: 07.03.2018
(60) Divisional application: 18161968.5
(73) Proprietor: Sicpa Holding SA, 1008 Prilly (CH)
(72) Inventor: LEPRINCE, Cécile, 1400 Yverdon-les-Bains (CH); JADAS, Leslie, 1418 Vuarrens (CH); FRIEDLI, Adrian, 4054 Basel (CH)
(74) Representative: Hoffmann Eitle
(86) International application number: PCT/EP2016/059146
(87) International publication number: WO 2016/173975

(56) References cited:
- GB-A- 2 184 689
- JP-A- 2002 067 526
- US-A- 3 908 547

## Description

### FIELD OF THE INVENTION

The present invention relates to the field of environmentally friendly fountain solutions for wet offset printing processes based on oxidative drying inks. In particular, the invention relates to a wet offset printing process for producing security features on security documents.

### BACKGROUND OF THE INVENTION

Offset printing processes consist of indirect methods wherein an ink is transferred from a printing plate to a blanket cylinder and then said ink is transferred onto a substrate. Accordingly, the blanket cylinder is inked by the printing plate. Offset printing takes advantage of the difference in surface energy between the image area and the non-image area of the printing plate. The image area is oleophilic, whereas the non-image area is hydrophilic. Thus, oily inks used in the method tend to adhere to the image-area and to be repelled from the non-image area of the printing plate. Wet offset printing is typically carried out by feeding both a fountain solution (also referred in the art as dampening solution) and an oleophilic ink to the printing plate surface to allow the image areas to receive preferentially the ink and the non-image areas preferentially the fountain solution and then transferring the ink deposited on image areas onto a substrate.

In a conventional wet offset printing process, the printing plate is damped with a fountain solution thus increasing the difference in surface energy between the image and the non-image area of the printing plate, thereby enhancing the ink repellency of the non-image area and the ink receptivity of the image. In such a process, water forms a film on the hydrophilic areas (i.e. the non-image areas) of the printing plate but contracts into tiny droplets on the water-repellent areas (i.e. the image areas). When an inked roller is passed over the damped printing plate, it is unable to ink the areas covered by the water film but it pushes aside the droplets on the water-repellant areas and these ink up. In other words, fountain solutions are used to separate the image and non-image areas so as to prevent the transfer of ink onto non-image areas of the printing plate. Moreover, the fountain solution has to fulfill various tasks including the wetting of the non-image area quickly, uniformly and without excess; quickly producing a homogeneous emulsion with the oily ink; protecting the printing plate against corrosion and wear and maintaining a low and constant temperature in the ink train.

Oxidative drying inks (i.e. inks which dry by oxidation in the presence of oxygen, in particular in the presence of the oxygen of the atmosphere) are typically used during offset printing processes. Oxidative drying inks preferably comprise catalysts or driers (also referred in the art as siccatives, siccative agents, desiccatives or dessicators) to set up the oxidation process. Examples of driers include inorganic or organic salts of metal(s), metallic soaps of organic acids, metal complexes and metal complex salts. Known driers comprise metals such e.g. cobalt, copper, manganese, cerium, zirconium, barium, strontium, lithium, bismuth, calcium, vanadium, zinc, iron and mixtures thereof. In particular, cobalt salts are widely used as driers for inks and coatings due to their high oxidative efficiency and their robustness, i.e. their efficiency remains independent of the coating compositions.

Failure of the ink to dry rapidly results in set off. Set off occurs when printing ink which is not dry adheres to the back of a printed substrate placed on top of it during the stacking of printed substrates as it comes off the presses (see e.g. US 4,604,952). This is a particular problem in the use of off-set printing processing for producing security features. Bank notes and other security documents typically carry a multitude of overlapping security features which are applied one after the other. If the previously applied security feature, e.g. a background image or graphic pattern, has not yet sufficiently dried, the whole multi-step printing process is delayed.

With the aim of accelerating the drying process, it has been the practice to add driers, in particular cobalt-containing driers, to the fountain solution. Even though the ink and the fountain solution are immiscible, a certain amount of fountain solution is invariably transferred from the plate to the inking rollers. The driers are carried thereby into the inking system and become emulsified in the ink (see e.g. US 3,354,824).

JP 2001341458 A discloses fountain solutions for lithographic printing processes, said fountain solutions comprising a fatty acid metal salt as drier to accelerate the drying process of oxidative drying inks on paper. Since the disclosed fatty acid metal salts are not water soluble, they are absorbed on porous grains, in particular hydrophobic silica particles having an average size between 0.1 µm and 10 µm, which are dispersed in water. Accordingly, such hydrophobic particles are prone to precipitation thus leading to fountain solutions suffering from a lack of stability upon storage and use on the offset printing machine. The description mentions that for example cobalt, manganese, lead, iron, calcium, cerium or rare earth metals can be used as metal component of the fatty acid metal salt. The sole examples disclosed in JP 2001341458 A are cobalt-containing fatty acid salts. Cobalt-containing compounds (water-soluble and water-insoluble) are classified as SVHC (substance of very high concern) for the health and the environment. US 3,908,547 A describes a process for hydrophilizing the non-image areas of an electrophotographically-produced printing master which comprises treating the master with a hydrophilizing solution which comprises water, at least one bivalent metal salt, at least one easily hydrolyzable metal salt, and a water-soluble urea-formaldehyde resin curable by a bivalent metal salt.

Due to the increasing concern about cobalt-containing compounds for reasons of health and environment and since high amounts of fountain solutions are used and consequently high amounts of waste are produced, there is a strong need for environmentally friendly fountain solutions.

Thus, there remains a need for wet offset printing process using an environmentally friendly fountain solution that combines stability upon storage at room temperature and stability at low temperature upon use on the printing machine without impacting the drying performance of the applied ink to produce security features on a substrate.

### SUMMARY OF THE INVENTION

Accordingly, it is an object of the present invention to overcome the deficiencies of the prior art as discussed above. This is achieved by the provision of using one or more water-soluble, health- and environment-friendly manganese (II) salts of a C1-C3 carboxylic acid, preferably manganese (II) salts of a C1-C3 monocarboxylic acid, more preferably manganese (II) salts of a C1- or a C2 monocarboxylic acid (i.e. manganese (II) formate and manganese (II) acetate) as additives in a fountain solution for a wet offset printing process, in particular for an indirect wet offset printing process.

The invention provides processes for printing a security feature by a wet offset printing process, in particular an indirect wet offset printing process, comprising the steps of:
a) wetting a printing plate with a fountain solution comprising one or more manganese (II) salts of a C1-C3 carboxylic acid, preferably manganese (II) salts of a C1-C3 monocarboxylic acid, more preferably manganese (II) salts of a C1-C2 monocarboxylic acid (i.e. manganese (II) formate and manganese (II) acetate);
b) inking the printing plate with an oxidative drying ink;
c) transferring the oxidative drying ink from the printing plate in an offset printing machine to a substrate, via the offset ("blanket") cylinder as explained before, so as to form a security feature on the substrate as defined in the claims.

Also described is the use of the fountain solution comprising the one or more manganese (II) salts of a C1-C3 carboxylic acid, preferably manganese (II) salts of a C1-C3 monocarboxylic acid, more preferably manganese (II) salts of a C1-C2 monocarboxylic acid (i.e. manganese (II) acetate and manganese (II) formate) described herein for producing a security feature by a wet offset printing processes, preferably by an indirect wet offset printing process such as those described herein.
The fountain solutions described comprise the one or more manganese (II) salts of a C1-C3 carboxylic acid, preferably manganese (II) salts of a C1-C3 monocarboxylic acid, more preferably manganese (II) salts of a C1-C2 carboxylic acid (i.e. manganese (II) formate and manganese (II) acetate) described herein, said manganese (II) salts being not classified as harmful compounds. The present disclosure describes a fountain solution suitable for a wet offset printing process, the fountain solution comprising one or more manganese (II) salts of a C1-C3 carboxylic acid and at least one component selected from
(a) acids,
(b) other pH adjusting compounds, wherein an acid and another pH adjusting compound optionally form together a buffer,
(c) water-soluble organic solvents,
(d) surfactants,
(e) polymeric desensitizers, and
(f) chelating agents.

Moreover, the presence of the one or more manganese (II) salts of a C1-C3 carboxylic acid, preferably manganese (II) salts of a C1-C3 monocarboxylic acid, more preferably manganese (II) salts of a C1-C2 monocarboxylic acid (i.e. manganese (II) formate and manganese (II) acetate) described herein in the fountain solutions described herein strongly decreases the drying time of oxidative drying inks applied by a wet offset printing process in comparison with fountain solutions lacking water-soluble or water-dispersible driers.

Accordingly, the fountain solutions of the present disclosure and their use for wet offset printing processes, in particular indirect wet offset printing processes, also allows to reduce the amount of the drier(s) in the oxidative drying inks, said drier(s) generally containing harmful metal complex driers, such as cobalt octoate, compared to fountain solutions lacking water-soluble or water-dispersible driers.

Another advantage of this fountain solution in comparison with fountain solutions containing driers such as those disclosed in JP 2001341458 A, is that its industrial preparation is easy and straightforward due to the high solubility of the one or more manganese (II) salts of a C1-C3 carboxylic acid.

The present disclosure also relates to a fountain solution concentrate as described below which can be diluted with water to prepare the fountain solution used in the process of the present invention.

### DETAILED DESCRIPTION

### Definitions

The following definitions clarify the meaning of the terms used in the description and in the claims.

As used herein, the indefinite article "a" indicates one as well as more than one and does not necessarily limit its referent noun to the singular.

As used herein, the term "about" means that the amount, value or limit in question may be the specific value designated or some other value in its neighborhood. Generally, the term "about" denoting a certain value is intended to denote a range within ± 5% of the value. For example, the phrase "about 100" denotes a range of 100 ± 5, i.e. the range from 95 to 105. Generally, when the term "about" is used, it can be expected that similar results or effects according to the invention can be obtained within a range of ±5% of the indicated value. However, a specific amount, value or limit supplemented with the term "about" is intended herein to disclose as well the very amount, value or limit as such, i.e. without the "about" supplement.

The term "water-soluble" refers to solubility in water at room temperature (25°C) in the amount used. If for instance a component can be used in an amount of 0.01 to 99.9 wt.%, preferably in an amount of 0.1 to 99 wt.%, more preferably in an amount of 0.5 to 90 wt%, even more preferably in an amount of 1 to 50 wt.% in the fountain solution used in the process of the present invention, it is water-soluble if it fully dissolves in water at 25°C in this weight range.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

The term "comprising" as used herein is intended to be non-exclusive and openended. Thus, for instance a fountain solution comprising a compound A may include other compounds besides A. However, the term "comprising" also covers, as a particular embodiment thereof, the more restrictive meanings of "consisting essentially of" and "consisting of", so that for instance "a fountain solution comprising a compound A" may also (essentially) consist of the compound A.

Where the present description refers to "preferred" embodiments/features, combinations of these "preferred" embodiments/features shall also be deemed as disclosed as long as this combination of "preferred" embodiments/features is technically meaningful.

The term "security feature" is used to denote an image, pattern or graphic element that can be used for authentication purposes.

The term "security document" refers to a document which is usually protected against counterfeit or fraud by at least one security feature. Examples of security documents include without limitation value documents and value commercial goods.

The descriptions of specific embodiments of the present invention are presented for purposes of illustration and description. They are not intended to be exhaustive or to limit the present invention to the precise forms disclosed, and obviously many modifications and variations are possible in light of the above teaching. The exemplary embodiments were chosen and described in order to best explain the principles of the present invention and its practical application, to thereby enable others skilled in the art to best use the present invention and various embodiments with various modifications as are suited to the particular use contemplated.

The present invention provides a process for producing (printing) a security feature on a substrate by a wet offset printing process. Wet offset printing is typically carried out by feeding both a fountain solution (also referred in the art as "dampening solution") and an oleophilic ink to the printing plate surface to allow the image areas to receive preferentially the ink and the non-image areas preferentially the fountain solution and then transferring the ink deposited on image areas onto a substrate.

In a conventional wet offset printing process, the printing plate is dampened with a fountain solution thus increasing the difference in surface energy between the image and the non-image area of the printing plate, thereby enhancing the ink repellency of the non-image area and the ink receptivity of the image. In such a process, water forms a film on the hydrophilic areas (i.e. the non-image areas) of the printing plate but contracts into tiny droplets on the water-repellent areas (i.e. the image areas). When an inked roller is passed over the damped printing plate, it is unable to ink the areas covered by the water film but it pushes aside the droplets on the water-repellant areas and these ink up. In other words, fountain solutions are used to separate the image and non-image areas so as to prevent the transfer of ink onto non-image areas of the printing plate.

Fundamentally, there exist two processes to bring the fountain solution to the printing plate. In the so-called "direct" process, the fountain solution is transported by a series of rollers that are in charge of providing a uniform, precisely metered film to the dampening roller, which is in direct contact with the printing plate. There, a film of fountain solution is created at the surface of the non-image area and contracts in tiny droplets at the surface of the image area. Separately, the ink is transported by a series of rollers to an inking roller that is in direct contact with the previously dampened printing plate. The film of fountain solution on the image area is thus emulsified into the ink, whereas the ink is repelled by the non-image area. Then, the ink emulsion is transferred through the blanket cylinder to the article or the printing substrate to generate an image. In the "indirect" process (also referred in the art as Dahlgren process), the fountain solution is brought by one or more ("a series") of rollers to the inking roller. Thus, the emulsion of fountain solution in the ink is created before contacting the printing plate, and its quality is therefore improved. The emulsion is then transferred to the printing plate. The remaining steps are identical to the direct process. In the Dahlgren system, the printing plate is contacted only by inked rollers, that is, the fountain solution must be carried from dampening unit rollers by means of one or more inked rollers, usually one of the form rollers, to the printing plate. This type of system requires the assistance of a water transport additive such as a water-soluble glycol as disclosed in US 3,625,715 or a volatile alcohol such as disclosed in US 3,168,037. The present invention makes preferably use of the "indirect" wetting (dampening) process, i.e. the printing plate is indirectly wetted.

For both processes, the **fountain solution** has to fulfill various tasks including the wetting of the non-image area quickly, uniformly and without excess; quickly producing a homogeneous emulsion with the oily ink; protecting the printing plate against corrosion and wear and maintaining a low and constant temperature in the ink train, typically between 5 and 15°C.

The fountain solution used in the process of the present invention is an aqueous composition comprising one or more water-soluble, health- and environment-friendly manganese (II) salts of a C1-C3 carboxylic acid, preferably manganese (II) salts of a C1-C3 monocarboxylic acid (i.e. manganese (II) formate, manganese (II) acetate and manganese (II) butanoate), more preferably manganese (II) salts of a C1-C2 monocarboxylic acid (i.e. manganese (II) formate and manganese (II) acetate). The mono- or dicarboxylic acid may be substituted, especially substituents that increase the water-solubility such as hydroxyl substituents.

Preferably, said one or more manganese (II) salts of a C1-C3 carboxylic acid, are present in an amount from about 0.01 wt.% to about 5 wt.% so as to avoid precipitation of said salts, preferably from about 0.05 wt.% to about 2 wt.%, and more preferably from about 0.1 wt.% to about 1 wt.%, the weight percents being based on the total weight of the fountain solution.

Aside from the one or more manganese (II) salts of a C1-C3 carboxylic acid described herein, preferably manganese (II) salts of a C1-C3 monocarboxylic acid (i.e. manganese (II) formate, manganese (II) acetate and manganese (II) propionate), more preferably manganese (II) salts of a C1- or C2- monocarboxylic acid (i.e. manganese (II) formate or manganese (II) acetate) and water, the fountain solution used in the process of the present invention may include one or more of the following components:
(a) acids, such as inorganic or organic acids, e.g.
(b) other pH adjusting compounds (resulting preferably in a buffer system),
(c) water-soluble organic solvents,
(d) surfactants,
(e) polymeric desensitizers,
(f) chelating agents,
(g) one or more further additives commonly used in fountain solutions which can be selected for instance from antifoaming agents, such as silicone-based fluids or emulsions (in particular, polydimethyl siloxanes), corrosion inhibitors, such as organic zinc salts, water-soluble anorganic polyphosphates (which can also act as chelating agent (f)), water-soluble copper salts, water-soluble molybdenum salts, water-soluble boron compounds, such as boric acid and boric acid salts, and any of the further corrosion inhibitors described on pages 4 and 5 of WO 98/51512; antimicrobial or biocidal agents (preservatives) such as fungicides, germicides, antibiotics, antibacterials, antivirals, antifungals agents, and combinations thereof; non-piling or lubricating additives, emulsion control agents (other than component d), viscosity-enhancing components (other than component e); dyes and tackifiers.

Further, the present disclosure describes a fountain solution suitable for a wet offset printing process, the fountain solution comprising one or more manganese (II) salts of a C1-C3 carboxylic acid and at least one component selected from
(a) one or more acids,
(b) one or more other pH adjusting compounds, wherein an acid and another pH adjusting compound optionally form together a buffer,
(c) one or more water-soluble organic solvents,
(d) one or more surfactants,
(e) one or more polymeric desensitizers, and
(f) one or more chelating agents.

In one embodiment the fountain solution according to the disclosure has a pH of 4 to 6, wherein this pH is preferably adjusted by a buffer, preferably a citric acid/citrate buffer.

In one further embodiment, the fountain solution of the disclosure comprises a polymeric desensitizer, preferably a film-forming polymeric sensitizer, more preferably a gum such as gum Arabic.

In one further embodiment, the fountain solution comprises the one or more manganese (II) salts of a C1-C3 carboxylic acid in an amount of 0.001 to 5 wt.%, preferably 0.05 wt.% to 2 wt.%, and comprises further:
(a) one or more acids,
(b) optionally one or more other pH adjusting compounds, wherein an acid and another pH adjusting compound optionally form together a buffer, wherein the total amount of acids and other pH adjusting compounds, if present, is 0.1 to 3 wt.%, preferably 0.2 to 1.5 wt.%,
(c) at least 0.5 wt.%, preferably 3-20 wt.% of one or more water-soluble organic solvents,
(d) 0.0001 to 1 wt.% of one or more surfactants,
(e) 0.01 to 1 wt.% of polymeric one or more desensitizers, and
(f) optionally 0.001 to 0.5 wt.% of one or more chelating agents, and
optionally up to 1wt.% of one or more further additives selected from non-surfactant-based antifoaming agents, corrosion inhibitors, preservatives, non-piling or lubricating additives, emulsion control agents, viscosity-enhancing components, dyes, and tackifiers, the remainder being preferably water, wherein all amounts given in wt.% are based on the total weight of the fountain solution.

The role of the one or more **acids** described herein is to maintain the hydrophilicity of the printing plate which is typically made of aluminum carrying a thin layer of aluminum oxide Al₂O₃. Preferred examples of acids include without limitation phosphoric acid, and mono- or polycarboxylic acids or mono- or polyhydroxycarboxylic acids such as citric acid, lactic acid and succinic acid, as well as blends thereof.

Suitable fountain solutions for the present invention preferably have a pH between about 4.0 and about 6.0, preferably between about 4.5 and about 5.5. To maintain the required pH and avoid pH variation due to different causes e.g. the dilution with water and/or the contact with the alkaline printing paper substrate, the fountain solution can comprise one or more **pH adjusting compounds** which, if desired, can provide the necessary **buffer** capacity together the aforementioned acids. A pH lower than about 4.0 may adversely affect the efficiency of other components present in the fountain solution, such as the polymeric desensitizer (e.g. gum Arabic), as well as increasing the drying time of the oxidative drying inks. Furthermore, a pH value lower than about 4 increases the risk of corrosion of metallic elements of the ink train. A pH value higher than about pH 6.0 impairs the efficiency of the acid used to maintain the hydrophilicity of the aluminum printing plate, because the acid used (e.g. phosphoric acid) is no longer able to react with the hydroxyl groups present at the surface of aluminum. The one or more pH adjusting compounds may be selected from the corresponding salt of inorganic acids, organic acids such as those described above, and a mixture thereof, provided that the pKₐ of said inorganic acids or organic acids is sufficiently close to the desired pH range. Since one or more acids can already be present in the fountain solution as described herein, the desired buffer capacity may be obtained by adding the amount of the corresponding acid salt, such as for example sodium phosphate, NaH₂PO₄, disodium phosphate, Na₂HPO₄, sodium citrate, sodium lactate, sodium succinate, or a mixture thereof, which is required to adjust the pH to the preferred value of 4.0 to 6.0. In one preferred embodiment the fountain solution used in the process of the present invention contains a buffer system containing a mono- or polycarboxylic acid or mono- or polyhydroxycarboxylic acid and the corresponding salt, such as a citric acid/citrate buffer, or a phosphate-based buffer.

The fountain solutions described herein may comprise one or more water-soluble **organic solvents** which are preferably selected from water-soluble monohydric alcohols (preferably ethanol and/or isopropyl alcohol), water-soluble polyhydric alcohols, e.g. glycols, polyglycols and glycerol, water-soluble ethers, water-soluble glycolethers, water-soluble esters and water-soluble glycolesters. The role of the one or more water-soluble organic solvents described herein is to lower the surface tension of the fountain solution and to quickly and efficiently wet the non-printing area of the printing plate. The polyhydric organic solvents can also serve as humectant as explained below. Typically, isopropyl alcohol is used as water-soluble organic solvent for an indirect (Dahlgren) process. Since the vapor pressure of isopropyl alcohol is rather low (33.1 mm Hg at 25°C), it evaporates in use, thus contributing to maintaining a low temperature in the ink train, typically between 5 and 15°C, and leaving no residues. Due to the growing health and environmental concern regarding isopropyl alcohol, which is classified as a volatile organic compound (VOC) and an irritating compound, substitutes have been developed and proposed to replace it. Typical example of those substitutes include without limitation less volatile or non-volatile alcohols, such as polyhydric alcohols, e.g. glycols, polyglycols, or glycerol, ethers, glycolethers, esters and glycolesters, such as e.g. those described in US 6,436,176. Glycols, glycerol, sorbitol, hexitol or polyglycols also have a humectant effect as described in US 4,798,627. Preferably, the one or more water-soluble organic solvents described herein are present in an amount of at least 0.5 wt.%, more preferably from about 3 to about 20 wt.%, e.g. from about 0.5 to about 5 wt.% (e.g. if no volatile monohydric alcohol is present) or from about 5 to about 15 wt.% (e.g. if a volatile monohydric alcohol such as isopropyl alcohol is present), each based on the total weight of the fountain solution.

The fountain solution used in the process of the present invention may comprise one or more **water-soluble surfactants.** The one or more surfactants have a similar function as the one or more water-soluble organic solvents, i.e. reducing the surface tension of the fountain solution to accelerate the wetting of the non-printing area of the printing plate by said fountain solution and to help forming the ink emulsion. Additionally, the presence of the one or more surfactants allows lowering the amount of isopropyl alcohol or alternative water-soluble organic solvents. The one or more surfactants may be anionic surfactants, non-ionic surfactants or mixtures thereof, such as those described for example in EP 2 098 377 A2. Preferably, the one or more surfactants described herein are present in an amount not exceeding about 1 wt.%, to avoid the formation of foam, preferably from about 0.001 to about 0.5 wt.%, the weight percents being based on the total weight of the fountain solution.

The fountain solutions described herein may comprise one or more polymeric **desensitizers** which preferably have film forming properties. The role of the one or more desensitizers is to protect the non-printing area of the printing plate, and to maintain its hydrophilicity. The one or more desensitizers can be selected from carbohydrate-based natural products such as gums, in particular gum Arabic. Alternatively, synthetic hydroxylated macromolecular compounds or synthetic derivatives of cellulose or starch may be used as the one or more desensitizers, such as those described e.g. in EP 2 098 377 A2. Preferably, the one or more desensitizers described herein are present in an amount from about 0.01 to about 5 wt.%, more preferably about 0.05 to about 1.5 wt.% based on the total weight of the fountain solution.

The fountain solutions described herein may comprise one or more **chelating agents.** The role of the one or more chelating agents is to coordinate or complex a potential excess of cations, especially when "hard" tap water is used. For example, calcium and magnesium cations present in such hard water may react with fatty acid groups present in the oxidative drying ink described herein and induce precipitation, or calcium carbonate may precipitate in the printing machine. Suitable chelating agents to coordinate cations are known in the art and include without limitation ethylenediaminetetraacetic acids and potassium salts and sodium salts thereof, diethylenetriaminepentaacetic acids and potassium salts and sodium salts thereof, triethylenetetraminehexaacetic acids and potassium salts and sodium salts thereof, hydroxyethylethylenediaminetriacetic acids and potassium salts and sodium salts thereof, nitrilotriacetic acids and sodium salts thereof, organic phosphonic acids such as 1-hydroxy ethane-1,1-diphosphonic acid and potassium salts and sodium salts thereof, methylenephosphonic acids and potassium salts and sodium salts thereof, and phosphonoalkanetricarboxylic acids such as disclosed in EP 2 098 377 A2. Preferably, the one or more chelating agents described herein are present in an amount from about 0.001 wt.% to about 0.5 wt.%, based on the total weight of the fountain solution.

The fountain solution described herein may be prepared by gently mixing water, the manganese (II) salts of a C1-C3 monocarboxylic acid described herein, and, if present, one or more of components (a) to (g) described before, so as to obtain an homogeneous and clear fountain solution.

Suitable fountain solutions for the present invention preferably have a conductivity not higher than 3000 µS/cm, preferably the conductivity is higher than 500 and not higher than 3000 µS/cm, so as to avoid printing problems such as for example scumming or stripping.

The present disclosure also describes a **fountain solution concentrate** comprising one or more manganese (II) salts of a C1-C3 carboxylic acid, optionally water and further at least one component selected from
(a) one or more acids,
(b) one or more other pH adjusting compounds, wherein an acid and another pH adjusting compound optionally form together a buffer,
(c) one or more water-soluble organic solvents,
(d) one or more surfactants,
(e) one or more polymeric desensitizers, and
(f) one or more chelating agents, and
(g) one or more further additives selected from non-surfactant-based antifoaming agents, corrosion inhibitors, preservatives, non-piling or lubricating additives, emulsion control agents, viscosity-enhancing components, dyes, and tackifiers, wherein the amount of nonaqueous components is at least 25 wt.%, preferably at least 35 wt.%, more preferably at 50 wt.% of the total weight of the concentrate. This concentrate can be diluted with water to obtain the fountain solution described herein.

Accordingly, in the fountain solution concentrate, the weight ratios of the components are such that after dilution with water a fountain solution as described and claimed herein can be obtained.

Offset printing processes use **oxidative drying inks** (i.e. inks which dry by oxidation in the presence of oxygen, in particular in the presence of the oxygen of the atmosphere). During the drying process, the oxygen combines with one or more components of the ink vehicle, converting the ink to a semi-solid or a solid state. The drying process may be accelerated by the use of one or more catalysts or driers such as metallic salts and/or by the application of a thermal treatment. During conventional printing of oxidative drying inks, the drying process proceeds during a few hours to a few days.

Preferred examples of driers include without limitation inorganic or organic salts of metal(s), metallic soaps of organic acids, metal complexes and metal complex salts. Known driers comprise metals such as, e.g. cobalt, copper, manganese, cerium, zirconium, barium, strontium, lithium, bismuth, calcium, vanadium, zinc, iron and mixtures thereof. In particular, cobalt salts are widely used as driers for inks and coatings due to their high oxidative efficiency and their robustness, i.e. their efficiency remains highly independent from the coating compositions. When present, the one or more driers are preferably present in an amount from about 0.001 to about 10 wt.%, based on the total weight of the oxidative drying ink.

Typically, oxidative drying inks suitable for wet offset printing processes have a viscosity in the range of about 3 to about 12 Pa s at 40°C and 1000 s⁻¹; the viscosities being measured on a Haake Roto-Visco RV1 with a cone plate 1.

Oxidative drying inks preferably comprise at least one oxidative drying varnish. Oxidative drying varnishes are typically polymers comprising unsaturated fatty acid residues, saturated fatty acids residues or mixtures thereof, as generally known in the art. Saturated and unsaturated fatty acid compounds may be obtained from natural and/or artificial sources. Preferably the oxidative drying varnishes described herein comprise unsaturated fatty acid residues to ensure the air drying properties. Suitable fatty acids are ethylenically unsaturated conjugated or non-conjugated C2-C24 carboxylic acids, such as myristoleic, palmitoleic, arachidonic, erucic, gadoleic, clupanadonic, oleic, ricinoleic, linoleic, linolenic, licanic, nisinic acid and eleostearic acids or mixtures thereof. Those fatty acids are typically used in the form of mixtures of fatty acids derived from natural or synthetic oils. Particularly preferred oxidative drying varnishes are resins comprising unsaturated acid groups, even more preferred are resins comprising unsaturated carboxylic acid groups. However the resins may also comprise saturated fatty acids residues. Preferably the oxidative drying varnishes described herein comprise acid groups, i.e. the oxidative drying varnishes are selected among acid modified resins. The oxidative drying varnishes described herein may be selected from the group consisting of alkyd resins, vinyl polymers, polyurethane resins, hyperbranched resins, rosin-modified maleic resins, rosin-modified phenol resins, rosin ester, petroleum resin-modified rosin ester, petroleum resin-modified alkyd resin, alkyd resin-modified rosin/phenol resin, alkyd resin-modified rosin ester, acrylic-modified rosin/phenol resin, acrylic-modified rosin ester, urethane-modified rosin/phenol resin, urethane-modified rosin ester, urethane-modified alkyd resin, epoxy-modified rosin/phenol resin, epoxy-modified alkyd resin, terpene resins nitrocellulose resins, polyolefins, polyamides, acrylic resins and combinations or mixtures thereof. Polymers and resins are herein interchangeably used.

The oxidative drying inks described herein may further comprise one or more antioxidants such as those known by people skilled in the art. Suitable antioxidants include without limitation alkyl phenols, hindered alkyl phenols, alkylthiomethyl-phenols, eugenol, secondary amines, thioether, phosphites, phosphonites, dithiocarbamates, gallates, malonates, propionates, acetates and other esters, carboxamides, hydroquinones, ascorbic acid, triazines, benzyl compounds as well as tocopherols and analogous terpenes. Such antioxidants are commercially available for example from the sources disclosed in WO 02/100 960. Additional general information about antioxidants can be found in Taschenbuch der Kunststoff-Additive (R. Gächter and H. Muller, Carl Hanser Verlag München Wien, 2. Ausg. 1983, ISBN 3-446-13689-4) or Plastics Additives Handbook (H. Zweifel, 5th Ed. 2001, Hanser Publishers Munich, ISB 3-446-21654-5). Hindered alkyl phenols are phenols having at least one or two alkyl groups ortho to the phenolic hydroxyl. One, preferably both, alkyl groups ortho to the phenolic hydroxyl are preferably secondary or tertiary alkyl, most preferred tertiary alkyl, especially tert-butyl, tert-amyl or 1,1,3,3-tetramethylbutyl. Preferred antioxidants are hindered alkyl phenols and especially, 2-tert-butyl-hydroquinone, 2,5-di-tert-butyl-hydroquinone, 2-tert-butyl-p-cresol and 2,6-di-tert-butyl-p-cresol. When present, the one or more antioxidants are present in an amount from about 0.05 to about 3 wt.%, the weight percents being based on the total weight of the oxidative drying ink.

The oxidative drying inks described herein may further comprise one or more coloring agents such as one or more dyes, one or more inorganic pigments, one or more organic pigments or mixtures thereof.

The oxidative drying inks described herein may further comprise one or more fillers or extenders preferably selected from the group consisting of carbon fibers, talcs, mica (muscovite), wollastonites, calcinated clays, china clays, kaolins, carbonates (e.g. calcium carbonate, sodium aluminum carbonate), silicates (e.g. magnesium silicate, aluminum silicate), sulfates (e.g. magnesium sulfate, barium sulphate), titanates (e.g. potassium titanate), alumina hydrates, silica, fumed silica, montmorillonites, graphites, anatases, rutiles, bentonites, vermiculites, zinc whites, zinc sulphides, wood flours, quartz flours, natural fibers, synthetic fibers and combinations thereof. When present, the one or more fillers or extenders are preferably present in an amount from about 0.1 to about 40 wt.%, the weight percents being based on the total weight of the oxidative drying ink.

The oxidative drying inks described herein may further comprise one or more waxes preferably selected from the group consisting of synthetic waxes, petroleum waxes and natural waxes. Preferably the one or more waxes are selected from the group consisting of microcrystalline waxes, paraffin waxes, polyethylene waxes, fluorocarbon waxes, polytetrafluoroethylene waxes, Fischer-Tropsch waxes, silicone fluids, beeswaxes, candelilla waxes, montan waxes, carnauba waxes and mixtures thereof. When present, the one or more waxes are preferably present in an amount from about 0.1 to about 15 wt.%, the weight percents being based on the total weight of the oxidative drying ink.

The oxidative drying inks described herein may further comprise one or more machine readable materials selected from the group consisting of magnetic materials, luminescent materials, electrically conductive materials, infrared-absorbing materials and combinations or mixtures thereof. As used herein, the term "machine readable material" refers to a material which exhibits at least one distinctive property which is detectable by a device or a machine, and which can be comprised in a layer so as to confer a way to authenticate said layer or article comprising said layer by the use of particular equipment for its authentication. Magnetic materials are preferably present in an amount from about 5 to about 70 wt.%, luminescent compounds are preferably present in an amount from about 0.5 to about 60wt.% and infrared-absorbing compounds are preferably present in an amount from about 0.3 to about 60 wt.%, the weight percents being based on the total weight of the oxidative drying ink.

As known by those skilled in the art, the oxidative drying inks described herein may further comprise one or more solvents and/or diluents.

The oxidative drying inks described herein may further comprise additives that include, but are not limited to, one or more of the following components as well as combinations of these: anti-settling agents, anti-foaming agents, surfactants and other processing aids known in the field of inks. Additives described herein may be present in the oxidative drying ink compositions disclosed herein in amounts and in forms known in the art, including in the form of so-called nano-materials where at least one of the dimensions of the particles is in the range of 1 to 1000 nm.

Particularly preferred oxidative drying inks suitable for the printing process described herein comprise the following components in the following amounts:

| **Ingredients** | **wt.%*** |
|---|---|
| the at least one oxidative drying varnish described herein | 10 to 90, preferably 25 to 90 |
| the one or more driers described herein | 0.001 to 10, preferably 0.1 to 5 |
| the one or more antioxidants described herein | 0.05 to 3, preferably 0.1 to 1 |
| the one or more waxes described herein | 0.5 to 5, preferably 1 to 4 |
| the one or more coloring agents described herein | 0 to 45, preferably 0.1 to 40 |
| the one or more fillers and/or extenders described herein | 0 to 30, preferably 1 to 20 |

| | |
|---|---|
| ^{*}the amounts indicated in wt.% are based on the total weight of the oxidative drying ink, the sum being 100 wt.%. | |

The oxidative drying inks described herein are typically prepared by a method comprising a step of dispersing, mixing and/or milling all the ingredients described herein, the one or more antioxidants described herein, the one or more waxes described herein the one or more coloring agents described herein, as the case may be, the one or more one or more fillers and/or extenders described herein when present and the one or more additives when present in the presence of the at least one oxidative drying varnish described herein, thus pasty compositions. The one or more driers described herein may be added to the ink either during the dispersing or mixing step of all other ingredients or may be added at a later stage.

As described herein, the process described herein comprises an inking step, wherein the oxidative drying ink described herein inks the printing plate of the offset printing machine and comprises a step of transferring the oxidative drying ink from the printing plate to a substrate via the offset ("blanket") cylinder as explained before, so as to form a security feature. ,

Typical examples of **substrate** include without limitation fiber-based substrates, preferably substrates based on cellulosic fibers such as paper, paper-containing materials, polymer-based substrates, composite materials (e.g. substrates obtained by the lamination of paper layers and polymer films), metals or metalized materials, glasses, ceramics and combinations thereof. Typical examples of polymer-based substrates are substrates made of ethylene- or propylene-based homo- and copolymers such as polypropylene (PP) and polyethylene (PE), polycarbonate (PC), polyvinyl chloride (PVC) and polyethylene terephthalate (PET). Typical examples of composite materials include without limitation multilayer structures (e.g. laminates) of at least one paper layer and at least one polymer film, including polymers such as those described above, as well as paper-like substrates based on mixtures of cellulosic fibers and synthetic polymer fibers. In one preferred embodiment the security features is printed on a substrate selected from offset papers and fiduciary papers. Offset paper is manufactured from wood-pulp cellulose with properties that make the paper suitable for offset printing, including dimensional stability, resistance to curling, high surface strength, a surface free from foreign particles and a high level of resistance to moisture penetration. Typically the basis weight of offset paper is of 30g/m² to 250g/m², preferably of 50g/m² to 150g/m².

Fiduciary paper (also referred in the art as security paper) is manufactured from lignin-free, cotton-pulp cellulose. Compared to offset papers, additional properties of fiduciary papers include enhanced mechanical resistance (especially resistance to tearing and wearing), resistance to soiling and treatment against degradation by micro-organisms (bacteria, virus and fungi). The mechanical resistance of fiduciary papers may be enhanced by the introduction into the paper (cotton-based) pulp of synthetic fibers, and the anti-soiling performance may be improved by coating or printing an anti-soil polymeric layer prior to printing or applying the security features of the banknote. Usually, the treatment with biocides is combined with the anti-soil treatment. Typically, the fiduciary paper has a basis weight of 50 to 150 g/m², preferably of 80 to 120 g/m².

Furthermore, the use of fiduciary paper instead of offset paper adds an additional element of anti-counterfeiting protection, since fiduciary paper is manufactured on special paper-making machines that are only available to manufacturers of security paper, and since the supply chain is protected such as to prevent the fiduciary paper from being diverted to counterfeiters.

The process described herein is particularly suitable for producing a security feature on a substrate that is suitable as substrate for a security document. According to one preferred embodiment, the security feature is used as background printing on the substrate to be printed. This means that on top of the security feature printed by the process described herein, i.e. the image, pattern or graphic element that serves for authentication purposes, further security features or non-security features are printed or applied in one or more further printing or applying runs and the security feature printed by the process described herein and the further security or non-security features overlap.

The term "security document" refers to a document having a value such as to render it potentially liable to attempts at counterfeiting or illegal reproduction and which is usually protected against counterfeit or fraud by one or more security features. Examples of security documents include without limitation value documents and value commercial goods. Typical example of value documents include e.g. without limitation banknotes, deeds, tickets, checks, vouchers, fiscal stamps and tax labels, and agreements, identity documents such as passports, identity cards, visas, bank cards, credit cards, transactions cards, access documents, security badges, entrance tickets, and transportation tickets or titles.

The term "value commercial good" refers to packaging material, in particular for pharmaceutical, cosmetics, electronics or food industry that may comprise one or more security features in order to warrant that the content of the packaging is genuine, like for instance genuine drugs. Example of these packaging material include without limitation labels such as authentication brand labels, tax banderoles, tamper evidence labels and seals. The security document described herein may further comprise one or more additional layers or coatings either below or on top of the security feature described herein. Should the adhesion between the substrate and the security feature described herein be insufficient, for example, due to the substrate material, a surface unevenness or a surface inhomogeneity, an additional layer, coating or a primer between the substrate and the security feature might be applied as known for those skilled in the art.

With the aim of further increasing the security level and the resistance against counterfeiting and illegal reproduction of security documents, the substrate may contain watermarks, security threads, fibers, planchettes, luminescent compounds, windows, foils, decals, coatings and combinations thereof.

The substrate described herein, on which the oxidative drying ink described herein is applied, may consist of an intrinsic part of a security document, or alternatively, the oxidative drying ink described herein is applied onto an auxiliary substrate such as for example a security thread, security stripe, a foil, a decal or a label and consequently transferred to a security document in a separate step.

Also described herein are uses of one or more manganese (II) salts of a C1-C3 carboxylic acid, preferably manganese (II) salts of a C1-C3 monocarboxylic acid, more preferably manganese (II) salts of a C1-C2 monocarboxylic acid (i.e. manganese (II) acetate and manganese (II) formate) as additive in the fountain solution described herein for a wet offset printing process.

Also described herein are uses of the fountain solutions comprising one or more manganese (II) salts of a C1-C3 carboxylic acid, preferably manganese (II) salts of a C1-C3 monocarboxylic acid, more preferably manganese (II) salts of a C1-C2 monocarboxylic acid (i.e. manganese (II) acetate and manganese (II) formate) for producing a security feature by a wet offset printing processes such as those described herein.

### EXAMPLE

The present invention is now described in more details with reference to non-limiting examples. The Examples below provide more detail for the preparation and use of the fountain solutions used in the process of the invention and comparative data.

**Table 1 - Offset oxidative drying ink composition**

| **Ingredients** | **Composition** (wt.%) |
|---|---|
| Varnish I | 32 |
| Alkyd resin (Uralac AD 85, from DSM) | |
| Varnish II | 36 |
| (40 parts phenolic/alkylphenolic resins cooked in 40 parts tung oil and dissolved in 20 mineral oil (PKWF 6/9 af, from Haltermann)) | |

| Pigments | |
|---|---|
| CI Pigment Red 146 | 11 |
| CI Pigment Red 185 | 5 |
| CI Pigment Yellow 13 | 5 |
| CI Pigment Blue 15 :3 | 2.2 |
| Wax (PE wax) (Lawter) | 4 |
| Antioxidant (tert-butyl hydroquinone) (Sigma Aldrich) | 0.3 |
| Drier (cobalt + manganese octoate) (OMG Borchers) | 4.5 |

### Preparation of the offset oxidative drying ink composition of Table 1.

The oxidative drying ink composition was prepared by mixing at room temperature the ingredients listed in Table 1. The resulting paste was ground on a SDY300 three roll mill in 3 passes (a first pass at a pressure of 6 bars, a second and a third pass at a pressure of 12 bars). The drier was added to the paste obtained as described herebefore and about 10 g of said so-obtained compositions were mixed in a SpeedMixer™ (DAC 150 SP CM31 from Hauschild Engineering) at a speed of 2500 rpm for 3 minutes at room temperature. A viscosity of about 7 Pa.s was measured on a Haake Roto Visco 1 rotational rheometer (40°C and 1000 s⁻¹).

### Preparation of the fountain solutions of Table 2.

15 kg of fountain solution were prepared each by gently mixing at room temperature for about 1 minute the ingredients given in Table 2 in the stated amounts. The salt solutions used therein were prepared as described further below. Wassertop SF 3.0 is a fountain solution concentrate available from DC Druckchemie GmbH, Germany.

**Table 2 - Fountain solution compositions**

| **Ingredient [wt.%]** | E1 | E2 | C0 | C1 | C2 | C3 |
|---|---|---|---|---|---|---|
| Mn(II) acetate solution / wt.% | 0.83 | - | - | - | - | - |
| Mn(II) formate solution / wt.% | - | 3.32 | - | - | - | - |
| Mn(II) nitrate solution / wt.% | - | - | - | 0.83 | - | - |
| Co(II) acetate solution / wt.% | - | - | - | - | 3.00 | - |
| V(II) oxalate solution / wt.% | - | - | - | - | - | 0.92 |
| Wassertop SF 3.0 / wt.% (DC Druckchemie GmbH) | 3.00 | 3.00 | 3.00 | 3.00 | 3.00 | 3.00 |
| Isopropanol / wt.% Thommen AG | 12.00 | 12.00 | 12.00 | 12.00 | 12.00 | 12.00 |
| Osmotic water / wt.% | 84.17 | 81.68 | 85.00 | 84.17 | 82.00 | 84.08 |
| | | | | | | |

| **Ingredient [g]** | E1 | E2 | C0 | C1 | C2 | C3 |
|---|---|---|---|---|---|---|
| Mn(II) acetate solution / g | 124.5 | - | - | - | - | - |
| Mn(II) formate solution / g | - | 498 | - | - | - | - |
| Mn(II) nitrate solution / g | - | - | - | 124.5 | - | - |
| Co(II) acetate solution / g | - | - | - | - | 450 | - |
| V(II) oxalate solution / g | - | - | - | - | - | 138 |
| Wassertop SF 3.0 / g (DC Druckchemie GmbH) | 450 | 450 | 450 | 450 | 450 | 450 |
| Isopropanol / g (Thommen AG) | 1800 | 1800 | 1800 | 1800 | 1800 | 1800 |
| Osmotic water / g | 12625.5 | 12252 | 12750 | 12625.5 | 12300 | 12612 |
| | | | | | | |

| **properties** | | | | | | |
|---|---|---|---|---|---|---|
| mmol metal/100g fountain solution | 1.2 | 1.2 | - | 1.2 | 1.2 | 1.2 |
| pH¹ | 5.01 | 4.60 | 5.65 | 4.66 | 4.65 | 4.08 |
| pH change after 24 hours | < 0.1 | < 0.1 | < 0.1 | < 0.1 | < 0.1 | < 0.1 |
| Visual appearance change after 24 hours | no change | no change | no change | precipitation | no change | no change |
| Conductivity¹ / µS/cm | 1150 | 1380 | 600 | 2250 | 970 | 1730 |

| | | | | | | |
|---|---|---|---|---|---|---|
| ¹: the pH and the conductivity were measured few minutes after the start of the printing process using a Mettler Toledo SevenGoDuo pH and conductivity combined device. | | | | | | |

### Preparation of acid salt solutions:

**Mn(II) acetate solution (200 g):** 71.6 g manganese (II) acetate tetrahydrate (purity 99 wt.%, SIGMA Aldrich AG) were added to 122.1 g deionized water in a 500 mL-glass vessel. The solution was stirred with a magnetic stirrer until complete dissolution of the crystals (15-20 minutes), then 6.3 g 80% acetic acid (Brenntag Schweizerhall AG) were added and the solution was further stirred during 3-4 minutes. The Mn(ll) acetate solution comprised 25.3 wt.% Mn(ll) acetate. The final content of Mn(II) acetate in the fountain solution was 31.46 g (0.21 wt.%).

**Mn(II) formate solution (500 g):** 33.4 g manganese (II) formate dihydrate (purity 98 wt.%, Alfa Aesar) were added to 466.1 g deionized water in a 1L-glass vessel. The solution was stirred with a magnetic stirrer until complete dissolution of the crystals (15-20 minutes), then 0.5 g 80% formic acid (Sigma Aldrich) were added and the solution was further stirred during 3-4 minutes. The Mn(II) formate solution comprised 5.24 wt.% Mn(ll) formate. The final content of Mn(II) formate in the fountain solution was 26.11 g (0.174 wt.%).

**Mn(II) nitrate solution (200 g):** 74.8 g manganese (II) nitrate tetrahydrate (purity 97 wt.%, SIGMA Aldrich AG) were added to 68.4 g deionized water in a 500 mL glass vessel. The solution was stirred with a magnetic stirrer until complete dissolution of the crystals (5-10 minutes), then 24.0 g 80% acetic acid (Brenntag Schweizerhall AG) and 32.8 g sodium acetate (purity 99 wt.%, SIGMA Aldrich AG) were added and the solution was further stirred during 5-10 minutes, until complete dissolution of the crystals. The Mn(ll) nitrate solution comprised 25.9 wt.% Mn(ll) nitrate. The final content of Mn(ll) nitrate in the fountain solution was 32.20 g (0.215 wt.%).

**V(II) oxalate solution:** a solution (OMG Borchers) containing 6.65 wt.% V(II) was directly added to the fountain solution. This solution comprised 18.14 wt.% V(II) oxalate. The final content of V(II) oxalate in the fountain solution was 25.03 g (0.167 wt.%).

**Co(II) acetate solution (500 g):** 50.8 g of cobalt (II) acetate tetrahydrate (purity 98 wt.%, Brenntag Schweizerhall AG) were added to 291.2 g deionized water in a 1L-glass vessel. The solution was stirred with a magnetic stirrer until complete dissolution of the crystals (15-20 minutes), then 2.0 g 80% acetic acid (Brenntag Schweizerhall AG) and 156 g deionized water were added and the solution were further stirred during 3-4 minutes. The Co(II) acetate solution comprised 7.08 wt.% Co(ll) acetate. The final content of Co(ll) acetate in the fountain solution was 31.86 g (0.212 wt.%).

### Printing Method

A square pattern (size 4.5 cm x 5.2 cm) was printed on offset paper (Antalis Normaset puro 100g/m², 70.1 cm x 49.9 cm) as well as on fiduciary paper (70.1 cm x 49.9 cm, Louisenthal BNP paper 100 g/m²) using a Heidelberg Speed Master 74-1 printing at 7500 sheets per hour (experimental conditions: T=22°C and relative humidity of 54%). The printing conditions are described in Table 3. For each example, a total of 2000 sheets were printed. A ream of 1000 blank sheets of the same paper was put over the 2000 printed sheets just after each print job to simulate standard drying conditions. The amount of offset oxidative drying ink was fixed such as to yield an optical density close to 1.2. The printer was equipped with an Alcolor continuous-film dampening system (Dahlgren system). The ratio between ink and fountain solution was established by varying the relative speed (in %) of the dampening and the inking rollers so as to avoid either overemulsion (by adding too much fountain solution) or insufficient emulsion of the ink (by not adding enough fountain solution).

**Table 3. Printing conditions**

| | E1 | E2 | C0 | C1 | C2 | C3 |
|---|---|---|---|---|---|---|
| Printing run 1 | | | | | | |
| % speed dampening roller | 55 | - | - | 55 | 55 | 55 |
| % speed inking roller | 40 | - | - | 41 | 42 | 42 |
| average optical density of the printed pattern -offset paper | 1.22 | | | 1.20 | 1.22 | 1.21 |
| average optical density of the printed pattern - fiduciary paper | 1.25 | - | - | 1.23 | 1.19 | 1.17 |

| Printing run 2 | | | | | | |
|---|---|---|---|---|---|---|
| % speed dampening roller | 50 | 44 | 50 | - | - | - |
| % speed inking roller | 40 | 40 | 40 | - | - | - |
| average optical density of the printed pattern -offset paper | 1.21 | 1.22 | 1.19 | | | |
| average optical density of the printed pattern - fiduciary paper¹ | 1.32 | 1.31 | 1.31 | - | - | - |

| | | | | | | |
|---|---|---|---|---|---|---|
| ¹ The optical density was measured at two areas of each printed pattern using a densitometer Gretag D19C and an average value was calculated therefrom. | | | | | | |

### Drying test

For each example, a drying test was carried out by selecting a sheet of printed substrate at the bottom of the pile after x days (see Table 4 for the number of days), cutting the print pattern, covering it with a blank piece of the same substrate then submitting the so-formed assembly to a counterpressure of 3.4 bars at 80°C with an ORMAG Intaglio Proof Press. The printed pattern and the blank piece were separated and the blank piece was checked for ink transfer. A scan was taken from both the original printed pattern and the blank piece using a Konica Minolta bizhub C552 color scanner, at a resolution of 600dpi. Each scan (comprising the original printed pattern and the blank piece) was opened in Photoshop CS 6 and the number of pixels for the original printed pattern and the transferred pattern on the blank piece was determined. The ratio between the number of pixels of the transferred pattern and the number of pixels of the original printed pattern was used to assess the amount of ink transferred from the original printed pattern to the blank piece. This ratio (in %) is indicated in Table 4A (for printing run 1) and Table 4B (for printing run 2).

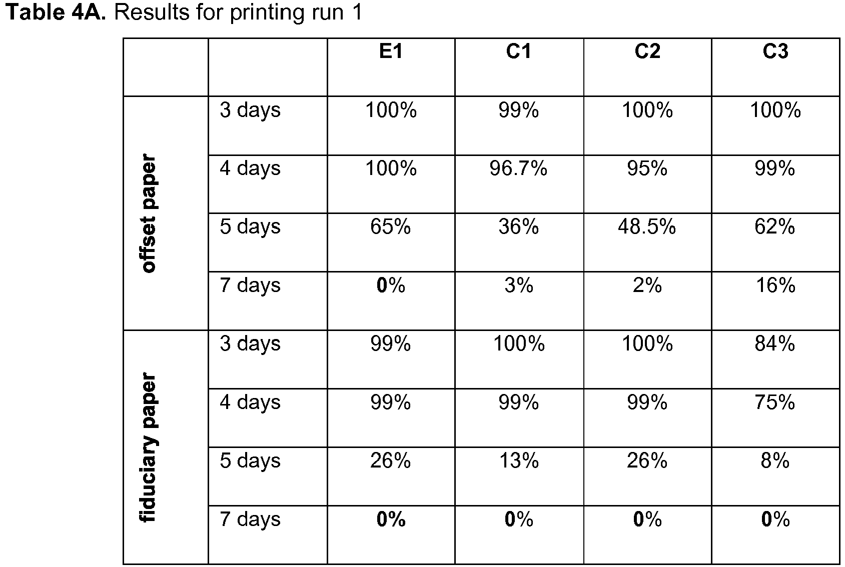

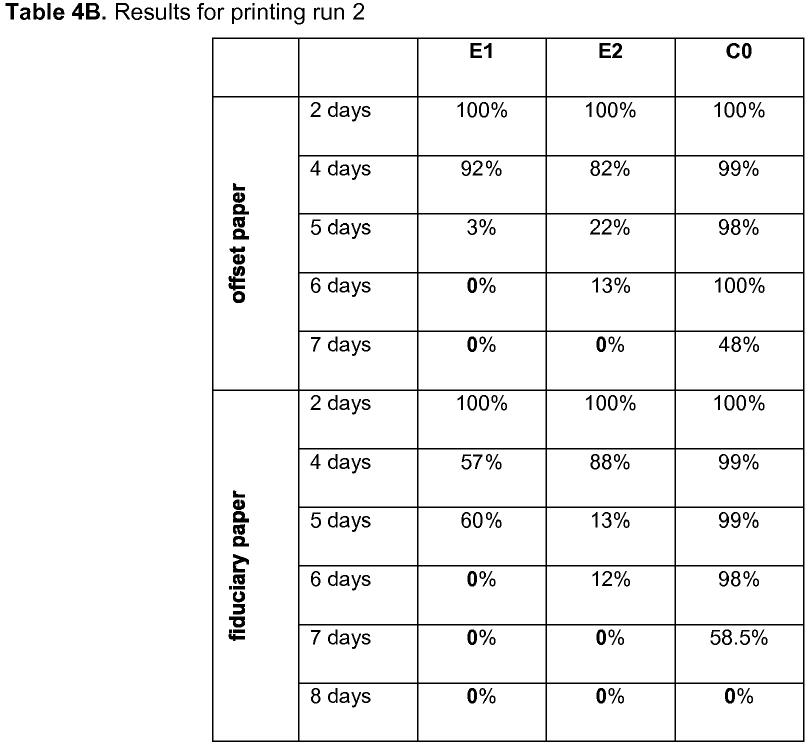

As shown in Tables 4A-4B, the use of the fountain solution comprising manganese (II) acetate (E1) or manganese (II) formate (E2) with an offset oxidative drying ink composition according to the present invention led to a printed pattern that exhibited an improved drying performance in comparison with fountain solution compositions lacking any metal salt (C0).

As shown in Tables 4A-4B, the use of the fountain solution comprising manganese (II) acetate (E1) with an offset oxidative drying ink composition led to a printed pattern that exhibited at least a similar drying performance in comparison with fountain solution composition comprising cobalt(II) acetate (C2), manganese (II) nitrate (C1) or vanadium(II) oxalate (C3). However, the fountain solution used in the process of the present invention which comprises a manganese (II) salt of a C1-C3 acid such as manganese (II) acetate (E1) or formate (E2) combines stability upon storage at room temperature and stability at low temperature upon use on the printing machine while being an environmentally friendly solution compared to other driers that are commonly used in the field of offset printing.

## Claims

1. A process for printing a security feature on a substrate by a wet offset printing process comprising the steps of:
a) wetting a printing plate with a fountain solution comprising one or more manganese (II) salts of a C1-C3 carboxylic acid,
b) inking the printing plate with an oxidative drying ink, and
c) transferring the oxidative drying ink from the printing plate in an offset printing machine to a substrate so as to print a security feature on the substrate.

2. The process according to claim 1, wherein in step (b) the printing plate is indirectly wetted.

3. The process according to any preceding claim, wherein the fountain solution comprises the one or more manganese (II) salts of a C1-C3 carboxylic acid in an amount from 0.001 to 5 wt.%, preferably from 0.05 to 2 wt.%, based on the total weight of the fountain solution.

4. The process according to any preceding claim, wherein the manganese (II) salts are selected from manganese (II) formate and manganese (II) acetate.

5. The process according to any preceding claim, wherein the substrate is selected from paper substrates, polymer-based substrates and composite substrates obtained by the lamination of at least one paper layer and at least one polymer film.

6. The process according to claim 5, wherein the paper is fiduciary paper.

7. Process according to any of claim 1 to 6 wherein the fountain solution comprising one or more manganese (II) salts of a C1-C3 carboxylic acid has a pH of 4 to 6, and wherein this pH is adjusted by a buffer, preferably a citric acid/citrate buffer.

8. Process according to claim 7, wherein the fountain solution further comprises at least one component selected from
(c) one or more water-soluble organic solvents,
(d) one or more surfactants,
(e) one or more polymeric desensitizers, and
(f) one or more chelating agents.

9. Process according to claim 7 or 8, wherein the manganese (II) salts are selected from manganese (II) formate and manganese (II) acetate.

10. Process according to claim 7, 8 or 9, wherein the fountain solution comprises a polymeric desensitizer, preferably a film-forming polymeric sensitizer, more preferably a gum such as gum Arabic.

11. Process according to claim 7, 8, 9 or 10, wherein the fountain solution comprises the one or more manganese (II) salts of a C1-C3 carboxylic acid in an amount of 0.001 to 5 wt.%, preferably 0.05 wt.% to 2 wt.%, and wherein the total amount of acids and other pH adjusting compounds is 0.1 to 3 wt.%, preferably 0.2 to 1.5 wt.%, said fountain solution further comprising:
(c) at least 0.5 wt.%, preferably 3-20 wt.% of one or more water-soluble organic solvents,
(d) 0.0001 to 1 wt.% of one or more surfactants,
(e) 0.01 to 1 wt.% of one or more polymeric desensitizers, and
(f) optionally 0.001 to 0.5 wt.% of one or more chelating agents, and
optionally up to 1wt.% of one or more further additives selected from non-surfactant-based antifoaming agents, corrosion inhibitors, preservatives, non-piling or lubricating additives, emulsion control agents, viscosity-enhancing components, dyes, and tackifiers, the remainder being preferably water, wherein all amounts given in wt.% are based on the total weight of the fountain solution.

## Patentansprüche

1. Ein Verfahren zum Drucken eines Sicherheitsmerkmals auf einem Substrat durch ein Nass-Offsetdruckverfahren, umfassend die folgenden Schritte:
a) Feuchten einer Druckplatte mit einem Feuchtmittel, das ein oder mehrere Mangan(II)-Salze einer C1-C3-Carbonsäure umfasst,
b) Einfärben der Druckplatte mit einer oxidativ trocknenden Tinte und
c) Übertragen der oxidativ trocknenden Tinte von der Druckplatte in einer Offsetdruckmaschine auf ein Substrat, um ein Sicherheitsmerkmal auf dem Substrat zu drucken.

2. Das Verfahren nach Anspruch 1, wobei in Schritt (b) die Druckplatte indirekt befeuchtet wird.

3. Das Verfahren nach einem der vorhergehenden Ansprüche, wobei das Feuchtmittel das eine oder die mehreren Mangan(II)-Salze einer C1-C3-Carbonsäure in einer Menge von 0,001 bis 5 Gew.-%, vorzugsweise von 0,05 bis 2 Gew.-%, umfasst, basierend auf das Gesamtgewicht des Feuchtmittels.

4. Das Verfahren nach einem der vorhergehenden Ansprüche, wobei die Mangan(II)-Salze aus Mangan(II)-Formiat und Mangan(II)-Acetat ausgewählt sind.

5. Das Verfahren nach einem der vorhergehenden Ansprüche, wobei das Substrat aus Papiersubstraten, Substraten auf Polymerbasis und Verbundsubstraten, die durch Laminieren von mindestens einer Papierschicht und mindestens einem Polymerfilm erhalten werden, ausgewählt ist.

6. Das Verfahren nach Anspruch 5, wobei das Papier Treuhandpapier ist.

7. Das Verfahren nach einem der Ansprüche 1 bis 6, wobei das Feuchtmittel, das ein oder mehrere Mangan(II)-Salze einer C1-C3-Carbonsäure umfasst, einen pH-Wert von 4 bis 6 aufweist, und wobei dieser pH-Wert durch einen Puffer, vorzugsweise einen Zitronensäure-/Zitratpuffer, eingestellt wird.

8. Das Verfahren nach Anspruch 7, wobei das Feuchtmittel weiter mindestens eine Komponente umfasst, die ausgewählt ist aus:
(c) einer oder mehreren wasserlöslichen organischen Lösungsmitteln,
(d) einem oder mehreren Tensiden,
(e) einem oder mehreren polymeren desensibilisierenden Mitteln, und
(f) einem oder mehreren Chelatbildnern.

9. Das Verfahren nach Anspruch 7 oder 8, wobei die Mangan(II)-Salze aus Mangan(II)-Formiat und Mangan(II)-Azetat ausgewählt sind.

10. Das Verfahren nach einem der Ansprüche 7, 8 oder 9, wobei das Feuchtmittel ein polymeres desensibilisierendes Mittel, vorzugsweise ein Film bildendes polymeres sensibilisierendes Mittel, insbesondere ein Gummi, wie Gummiarabikum, umfasst.

11. Das Verfahren nach einem der Ansprüche 7, 8, 9 oder 10, wobei das Feuchtmittel das eine oder die mehreren Mangan(II)-Salze einer C1-C3-Carbonsäure in einer Menge von 0,001 bis 5 Gew.-%, vorzugsweise 0,05 Gew.-% bis 2 Gew.-%, umfasst, und wobei die Gesamtmenge der Säuren und anderen pH-Einstellverbindungen 0,1 bis 3 Gew.-%, vorzugsweise 0,2 bis 1,5 Gew.-%, beträgt, wobei das Feuchtmittel weiter umfasst:
(c) mindestens 0,5 Gew.-%, vorzugsweise 3-20 Gew.-%, eines oder mehrerer wasserlöslicher organischer Lösungsmittel,
(d) 0,0001 bis 1 Gew.-% eines oder mehrerer Tenside,
(e) 0,01 bis 1 Gew.-% eines oder mehrerer polymerer desensibilisierender Mittel, und
(f) gegebenenfalls 0,001 bis 0,5 Gew.-% eines oder mehrerer Chelatbildner, und
gegebenenfalls bis zu 1 Gew.-% eines oder mehrerer weiterer Additive, die aus Antischaummitteln auf Nicht-Tensidbasis, Korrosionsinhibitoren, Konservierungsmitteln, Antiunebenheit- oder Schmiermittel-Additiven, Emulsionssteuerungsmitteln, Viskosität verbessernden Komponenten, Farbstoffen und Klebrigmachern ausgewählt sind, wobei der Rest vorzugsweise Wasser ist, wobei alle in Gew.-% angegebenen Mengen auf das Gesamtgewicht des Feuchtmittels beziehen.

## Revendications

1. Un procédé d'impression d'un élément de sécurité sur un substrat par un procédé d'impression offset humide, le procédé comprenant les étapes consistant à :
a) mouiller une plaque d'impression avec une solution de mouillage comprenant un ou plusieurs sels de manganèse (II) d'un acide carboxylique C1-C3,
b) encrer la plaque d'impression avec une encre à séchage par oxydation, et
c) transférer l'encre à séchage par oxydation de la plaque d'impression dans une machine d'impression offset à un substrat afin d' imprimer un élément de sécurité sur le substrat.

2. Le procédé selon la revendication 1, dans lequel à l'étape (b) la plaque d'impression est mouillée indirectement.

3. Le procédé selon l'une quelconque des revendications précédentes, dans lequel la solution de mouillage comprend l'un ou plusieurs sels de manganèse (II) d'un acide carboxylique C1-C3 dans une quantité de 0,001 à 5 % en poids, préférablement de 0,05 à 2 % en poids, à base du poids total de la solution de mouillage.

4. Le procédé selon l'une quelconque des revendications précédentes, dans lequel les sels de manganèse sont choisis parmi le formate de manganèse (II) et l'acétate de manganèse (II).

5. Le procédé selon l'une quelconque des revendications précédentes, dans lequel le substrat est choisi parmi des substrats de papier, des substrats à base de polymère et des substrats composites obtenues par la stratification d'au moins une couche de papier et au moins un film de polymère.

6. Le procédé selon la revendication 5, dans lequel le papier est de papier fiduciaire.

7. Le procédé selon l'une quelconque des revendications 1 à 6, dans lequel la solution de mouillage comprenant un ou plusieurs sels de manganèse (II) d'un acide carboxylique C1-C3 a un pH de 4 à 6, et dans lequel le pH est régulé par un tampon, préférablement un tampon d'acide citrique / citrate.

8. Le procédé selon la revendication 7, dans lequel la solution de mouillage comprend en outre
au moins un composant choisi parmi
(c) un ou plusieurs solvants organiques hydrosolubles,
(d) un ou plusieurs surfactants,
(e) un ou plusieurs désensibilisateurs polymériques et
(f) un ou plusieurs agents de chélation.

9. Le procédé selon la revendication 7 ou 8, dans lequel les sels de manganèse (II) sont choisis parmi le formate de manganèse (II) et l'acétate de manganèse (II).

10. Le procédé selon l'une quelconque des revendications 7, 8 ou 9, dans lequel la solution de mouillage comprend un désensibilisateur polymérique, préférablement un sensibilisateur polymérique filmogène, plus préférablement une gomme telle qu'une gomme arabique.

11. Le procédé selon l'une quelconque des revendications 7, 8, 9 ou 10, dans lequel la solution de mouillage comprend l'un ou plusieurs sels de manganèse (II) d'un acide carboxylique C1-C3 dans une quantité de 0,001 à 5 % en poids, préférablement de 0,05 % en poids à 2 % en poids, et dans lequel la quantité totale d'acides et autres composés régulateurs de pH est de 0,1 à 3 % en poids, préférablement de 0,2 à 1,5 % en poids, ladite solution de mouillage comprenant en outre:
(c) au moins 0,5 % en poids, préférablement 3-20 % en poids d'un ou plusieurs solvants organiques hydrosolubles,
(d) de 0,0001 à 1 % en poids d'un ou plusieurs surfactants,
(e) de 0,01 à 1 % en poids d'un ou plusieurs désensibilisateurs polymériques et
(f) facultativement de 0,001 à 0,5 % en poids d'un ou plusieurs agents de chélation et facultativement jusqu'à 1 % en poids d'un ou plusieurs autres additifs choisis parmi des agents anti-mousse à base de non-surfactant, des inhibiteurs de corrosion, des conservateurs, des additifs lubrifiants ou anti-accumulation, des agents de contrôle d'émulsion, des agents renforçateurs de viscosité, des colorants et des agents collants, le reste étant préférablement d'eau, dans lequel toutes les quantités indiquées dans % en poids sont basées sur le poids total de la solution de mouillage.
